# EUROPEAN PATENT SPECIFICATION

(11) **EP 3 620 360 B1**
(45) Date of publication and mention of the grant of the patent: **14.10.2020**
(21) Application number: 18210251.7
(22) Date of filing: 04.12.2018
(51) Int. Cl.: B62J 35/00, B60K 11/08

(54) **STRADDLE TYPE VEHICLE**
GRÄTSCHSITZFAHRZEUG
VÉHICULE DE TYPE À SELLE

(30) Priority: 05.09.2018 JP 2018165658
(43) Date of publication of application: 11.03.2020
(73) Proprietor: Yamaha Hatsudoki Kabushiki Kaisha, Shizuoka-ken 438-8501 (JP)
(72) Inventor: AKAGI, Kiyotaka, Iwata-shi, Shizuoka-ken, 438-8501 (JP)
(74) Representative: Grünecker Patent- und Rechtsanwälte PartG mbB

(56) References cited:
- EP-A1- 2 230 120
- Ducati: "Ducati Diavel Workshop Manual", , 1 January 2013 (2013-01-01), XP055594418, Retrieved from the Internet: URL:https://data2.manualslib.com/pdf4/84/8 342/834200-ducati/diavel.pdf?7d8e755725170 9d040cfb44d52963a1c [retrieved on 2019-06-05]

## Description

The present invention relates to a straddle type vehicle with a tank cover attached to a fuel tank. Document XP055594418, which is a workshop manual of the Ducati Diavel, is considered being the closest prior art and shows a straddle type vehicle comprising: a head pipe; a front fork including right and left forkpipes in a pair and rotatably supported by the head pipe; a headlight unit arranged ahead of the head pipe and rotatably supported together with the front fork; a main frame extended rearward from the head pipe; a fuel tank arranged above the main frame; a handle lock arranged above the main frame and between the head pipe and the fuel tank, the handle lock is configured to lock rotation of the front fork in response to operation on a lock operation part by a rider; a seat arranged above the main frame and behind the fuel tank; and a tank cover attached to the fuel tank, wherein the tank cover includes a center cover arranged above the fuel tank so as to overlap the fuel tank in a vehicle plan view, and side covers, the center cover has a front end located ahead of a front end of the lock operation part and the center cover has a rear end located behind a rear end of the fuel tank, the front fork is arranged inside the respective frontward extended parts of the side covers in a pair in a left-right direction in a vehicle front view, when the front fork has been rotated to the left to a maximum angle about the head pipe, the left forkpipe and the left side cover overlap each other in a vehicle side view, when the front fork has been rotated to the right to a maximum angle about the head pipe, the right forkpipe and the right side cover overlap each other in a vehicle side view, the tank cover includes a wind receiving member attached to the front end of each of the respective frontward extended parts of the side covers in a pair and to receive traveling wind from the front of the vehicle, in a vehicle front view, the front fork and the headlight unit are arranged inside the wind receiving members in the left-right direction, the wind receiving member is attached to each of the respective frontward extended parts of the side covers in a pair, and in a vehicle plan view, the front end part of the wind receiving member is tilted rearward as going outward in the left-right direction, and the area of the front end part of the wind receiving member in a vehicle front view is larger than the area of the front end part of the wind receiving member in a vehicle side view.

Japanese Patent Application Laid-Open No. 2009-161016 shows a straddle type vehicle with a tank cover attached to a fuel tank. This tank cover includes a center cover provided on the upper surface of the fuel tank, and right and left side covers in a pair provided on the side surfaces of the fuel tank.

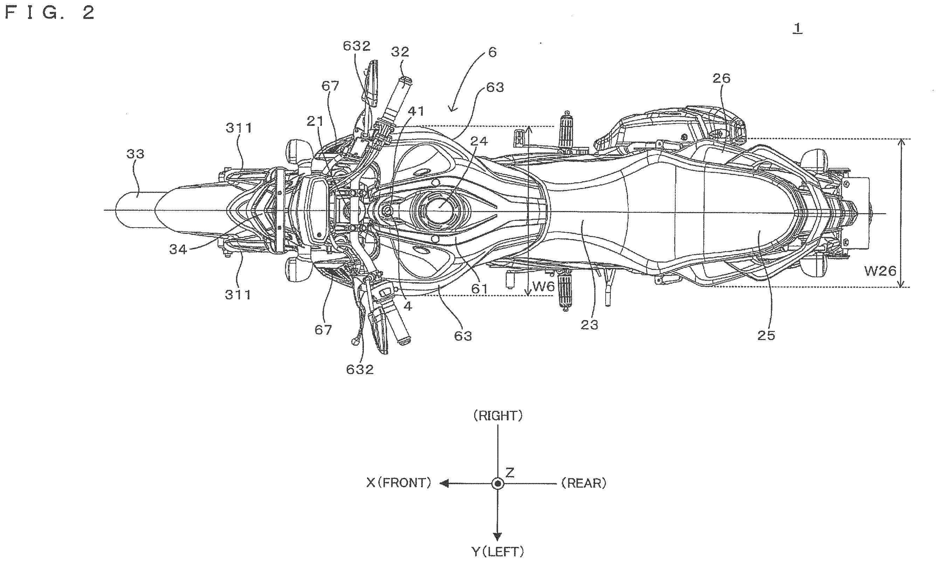

One object of providing the foregoing tank cover is to make the appearance of the straddle type vehicle look large. Hence, it is preferable to enable to increase the size of the tank cover. However, size increase of the tank cover has not been achieved easily. In this regard, in the straddle type vehicle shown in patent document 1, a lock operation part of a handle lock for locking the rotation of a front fork to which handles are attached (this lock operation part corresponds to a keyhole) is provided ahead of the handles (Fig. 2). This has necessitated a rider to get across the handles for accessing the handle lock and caused poor accessibility. Increased size of the tank cover arranged ahead of the rider has also been a cause for poor accessibility to the handle lock.

The present invention has been developed in view of the foregoing problem, and is intended to provide a technique capable of enabling size increase of a tank cover while ensuring accessibility to a handle lock for a rider.

One aspect of this invention is directed to a straddle type vehicle comprising: a head pipe; a front fork including right and left forkpipes in a pair and rotatably supported by the head pipe; a headlight unit arranged ahead of the head pipe and rotatably supported together with the front fork; a main frame extended rearward from the head pipe; a fuel tank arranged above the main frame; a handle lock arranged above the main frame and between the head pipe and the fuel tank, the handle lock is configured to lock rotation of the front fork in response to operation on a lock operation part by a rider; a seat arranged above the main frame and behind the fuel tank; and a tank cover attached to the fuel tank, wherein the tank cover includes a center cover arranged above the fuel tank so as to overlap the fuel tank in a vehicle plan view, and side covers in a pair arranged on the right side and the left side of the center cover so as to overlap the fuel tank in a vehicle side view, the center cover has a front end located ahead of a front end of the lock operation part and the center cover has a rear end located behind a rear end of the fuel tank, the center cover and each of the side covers are fastened to each other at front side fastening position ahead of the front end of the lock operation part and at rear side fastening position behind the rear end of the fuel tank, each of the side covers includes a frontward extended part extended frontward further than the front end of the center cover, the front fork is arranged inside the respective frontward extended parts of the side covers in a pair in a left-right direction in a vehicle front view, when the front fork has been rotated to the left to a maximum angle about the head pipe, the left forkpipe and the left side cover overlap each other in a vehicle side view, when the vehicle is traveling in a straight line, the forkpipes in a pair do not overlap the side covers in a pair in a vehicle side view, when the front fork has been rotated to the right to a maximum angle about the head pipe, the right forkpipe and the right side cover overlap each other in a vehicle side view, the tank cover includes a wind receiving member attached to the front end of each of the respective frontward extended parts of the side covers in a pair and to receive traveling wind from the front of the vehicle, in a vehicle front view, the front fork and the headlight unit are arranged inside the wind receiving members in the left-right direction, the wind receiving member is attached to each of the respective frontward extended parts of the side covers in a pair, in a vehicle front view, each of the side covers includes a projecting part projecting outward in the left-right direction from the wind receiving member at a position where the tank cover has a maximum width in the left-right direction, and a front end part of the wind receiving member has a width larger than the width of the projecting part in the left-right direction, and in a vehicle plan view, the front end part of the wind receiving member is tilted rearward as going outward in the left-right direction, and the area of the front end part of the wind receiving member in a vehicle front view is larger than the area of the front end part of the wind receiving member in a vehicle side view.

According to the present invention (straddle type vehicle) having the foregoing configuration, the handle lock is arranged behind the front fork. This makes it possible to ensure accessibility to the handle lock for a rider.

The handle lock is arranged between the front fork and the fuel tank. This unintentionally produces space (clearance) in the left-right direction at the handle lock to cause the risk of difficulty in making the appearance of the straddle type vehicle look large. In this regard, with the intention of increasing the size of the vehicle further in a front-rear direction, the front end of the center cover is located ahead of the front end of the lock operation part of the handle lock, and the rear end of the center cover is located behind the rear end of the fuel tank. Specifically, the center cover is extended long in a range from a position ahead of the lock operation part to a position behind the fuel tank. Further, the side cover includes the frontward extended part extended frontward further than the front end of the center cover. When the front fork has been rotated to the right or left to a maximum angle, the right or left forkpipe of the front fork overlaps the right or left side cover in a vehicle side view. Specifically, the side cover is extended frontward longer than the center cover to such an extent that the side cover overlaps the forkpipe of the front fork having rotated to a maximum. This encourages size increase of the tank cover including the center cover and the side cover.

As the fuel tank, both a flangeless fuel tank without an outer flange and a fuel tank with an outer flange are available. If the latter is used, the "fuel tank" according to the present invention does not include a flange. Thus, the rear end of the center cover can be located either ahead of or behind the rear end of a flange.

As described above, the present invention is capable of encouraging size increase of the tank cover while ensuring accessibility to the handle lock for a rider. The present invention is further capable of effectively handling new problems to occur resulting from the foregoing configuration.

The right and left side covers in a pair include the frontward extended parts extended frontward further than the center cover provided between the side covers. The frontward extended parts are required to be arranged outside the front fork and the headlight unit in order to avoid interference with the front fork. Hence, when the vehicle is traveling, a traveling wind hits the inner sides of the frontward extended parts to cause the risk of separation of the side covers from the center cover.

In this regard, according to the present invention, the center cover and the side cover are fastened to each other at the fastening position ahead of the front end of the lock operation part, and at the fastening position behind the rear end of the fuel tank. In this way, tight fastening of the center cover and the side cover is encouraged. Further, the wind receiving member to receive the traveling wind from the front is attached to the front end of the frontward extended part of the side cover. The traveling wind hitting the wind receiving member from the front acts to press the wind receiving member rearward. This rearward force acting on the wind receiving member is functional to work against force acting to separate the side cover from the center cover. This makes it possible to reduce the likelihood of separation of the side cover from the center cover.

Additionally, in a vehicle front view, the side cover includes the projecting part projecting outward in the left-right direction from the wind receiving member at the position where the width of the tank cover is at a maximum in the left-right direction. In the left-right direction, the width of the front end part of the wind receiving member is larger than the width of the projecting part. Further, the area of the front end part of the wind receiving member in a vehicle front view is larger than the area of the front end part of the wind receiving member in a vehicle side view. This configuration makes it possible to ensure rearward force acting on the wind receiving member more reliably, so that the likelihood of separation of the side cover from the center cover can be reduced effectively.

The straddle type vehicle may be configured so that in a vehicle plan view, the respective frontward extended parts of the side covers in a pair and the front end of the center cover form a concave part recessed rearward, the tank cover includes an inner cover provided at the concave part, and the inner cover is attached to the respective frontward extended parts of the side covers in a pair and the center cover so as to overlap the inner sides of peripheries of the frontward extended parts and the front end of the center cover in a vehicle front view. In this configuration, the inner cover is functional to prevent entry of the traveling wind into space formed inside the center cover and the right and left side covers in a pair, so that the likelihood of separation of the side covers from the center cover can be reduced more effectively.

The straddle type vehicle may be configured so that the center cover has an operation hole formed behind the front end of the center cover, and the lock operation part is provided at the operation hole. This configuration allows the front end of the center cover to be located ahead of the front end of the lock operation part, so that size increase of the tank cover can be encouraged.

The straddle type vehicle may be configured so that the wind receiving member includes: a mesh part which has a plurality of vent holes and arranged at the front end of the wind receiving member; and a wind receiving part which is arranged behind the mesh part and receives a traveling wind from the front of the vehicle, the traveling wind passing through the plurality of the vent holes. In this configuration, the traveling wind hitting the wind receiving part after passing the plurality of the vent holes of the mesh part acts to press the wind receiving part rearward. This rearward force is functional to reduce the likelihood of separation of the side cover from the center cover.

The straddle type vehicle may be configured so that the wind receiving part is a box-like wind receiving box having a vent opening formed to be pointed frontward, a periphery of the vent opening of the wind receiving box is in contact with the mesh part in such a manner that the plurality of the vent holes are included in the vent opening in a vehicle front view, and the traveling wind from the front which passes through the plurality of the vent holes, is receives by an inner wall of the wind receiving box. In this configuration, force acting to press the wind receiving part rearward is produced effectively, so that the likelihood of separation of the side cover from the center cover can be reduced more reliably.

The foregoing configuration is not the limited configuration of the wind receiving member. Therefore, the straddle type vehicle may be configured so that the wind receiving member includes a wind receiving part including a wind receiving surface arranged on an entire surface of the wind receiving member, and the wind receiving surface receives the traveling wind from the front.

The straddle type vehicle may be further comprises a rear cover provided behind the tank cover, wherein in a vehicle plan view, the tank cover has a width larger than the width of the rear cover in the left-side direction. In this way, size increase of the tank cover can be encouraged.

As described above, according to the present invention, size increase of the tank cover can be encouraged while accessibility to the handle lock for a rider is ensured.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.
Fig. 1 is a left side view showing a motorcycle corresponding to an example of a straddle type vehicle according to the present invention.
Fig. 2 is a plan view showing the motorcycle in Fig. 1.
Fig. 3 is a front view showing the motorcycle in Fig. 1.
Fig. 4 is a rear view showing the motorcycle in Fig. 1.
Fig. 5 is a perspective view partially showing the tank cover and its periphery.
Fig. 6 is an exploded perspective view showing the tank cover in an exploded state.
Fig. 7 is a plan view partially showing the tank cover and its periphery.
Fig. 8 is a left side view partially showing the tank cover and its periphery.

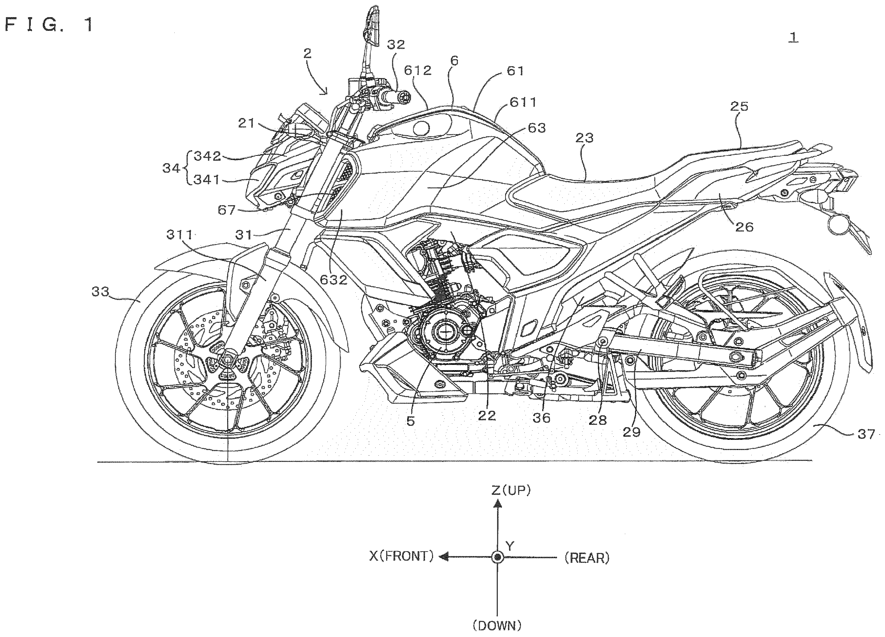

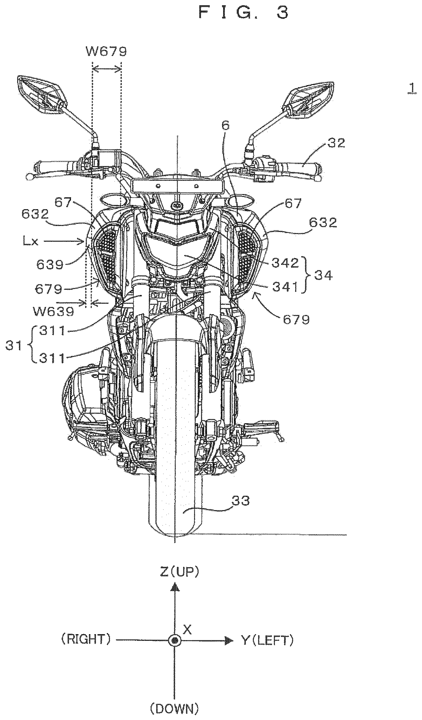

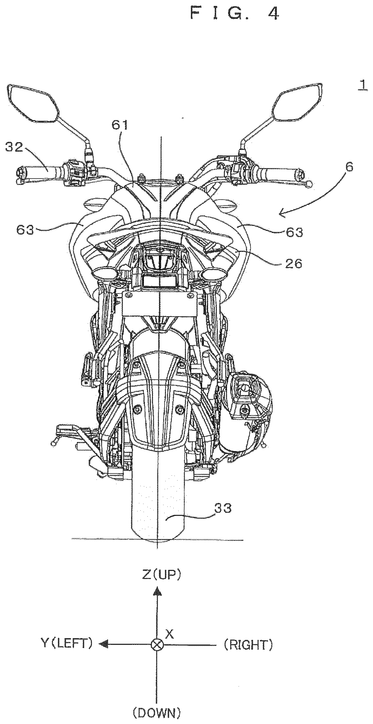

Fig. 1 is a left side view showing a motorcycle corresponding to an example of a straddle type vehicle according to the present invention. Fig. 2 is a plan view showing the motorcycle in Fig. 1. Fig. 3 is a front view showing the motorcycle in Fig. 1. Fig. 4 is a rear view showing the motorcycle in Fig. 1. Where appropriate, XYZ orthogonal coordinates are shown in the drawings referred to in this specification defining a front-rear direction X, a left-right direction Y, and an up-down direction Z as viewed from a rider of a motorcycle 1.

The motorcycle 1 includes a vehicle body frame 2 extended in the front-rear direction X. The vehicle body frame 2 includes a head pipe 21 and a main frame 22. The main frame 22 is extended rearward from the head pipe 21. The vehicle body frame 2 supports a seat 23 on which a rider sit, and a fuel tank 24 storing fuel. The seat 23 and the fuel tank 24 are arranged behind the head pipe 21 and above the main frame 22. The fuel tank 24 is located between the head pipe 21 and the seat 23 in the front-rear direction X. Specifically, the fuel tank 24 is arranged behind the head pipe 21 and the seat 23 is arranged behind the fuel tank 24. The fuel tank 24 is covered by a tank cover 6 described in detail later. Thus, the fuel tank 24 is not exposed in Figs. 1, 3, and 4, and a part of the fuel tank 24 (fuel filler opening) is shown in Fig. 2.

A tandem seat 25 on which a passenger can sit is arranged behind the seat 23. A rear cover 26 is arranged behind the seat 23 and below the tandem seat 25. A lower part of the tandem seat 25 is attached to an upper part of the rear cover 26. In this way, the tandem seat 25 is supported by the rear cover 26. The rear cover 26 overlaps a rear wheel 37 in a vehicle plan view and functions as a guard against mud from the rear wheel 37.

The head pipe 21 supports a front fork 31 so as to allow the front fork 31 to rotate to the right and left. Handles 32 are attached to the upper end of the front fork 31. The front fork 31 includes right and left forkpipes 311 in a pair extended obliquely downward towards the front. A front wheel 33 is caught between the forkpipes 311 from the left-right direction Y to be rotatably supported. The front fork 31, the handles 32, and the front wheel 33 can rotate integrally about the head pipe 21. This allows a rider to control a traveling direction of the motorcycle 1 through operation on the handles 32 with both hands which are across the fuel tank 24 while the rider is at the seat 23.

A headlight unit 34 is arranged ahead of the head pipe 21. The headlight unit 34 includes a headlight 341 for emitting light frontward, and a cover 342 used for attaching the headlight 341 to the front fork 31. The headlight unit 34 is rotatable together with the front fork 31. The headlight 341 illuminates a traveling direction of the motorcycle 1.

A handle lock 4 for locking the rotation of the front fork 31 about the head pipe 21 is arranged above the main frame 22. The handle lock 4 is located between the head pipe 21 and the fuel tank 24 in the front-rear direction X. Specifically, the handle lock 4 is arranged behind the head pipe 21 and ahead of the fuel tank 24. The handle lock 4 has an upper end where a keyhole 41 is provided. In response to operation on the keyhole 41, the handle lock 4 locks the rotation of the front fork 31. Specifically, a rider can lock the rotation of the front fork 31 or release the front fork 31 from the lock by rotating the key inserted into the keyhole 41.

The main frame 22 has a rear end where a pivot shaft 28 is attached. A swing arm 29 is extended rearward from the pivot shaft 28. The swing arm 29 is attached to the main frame 22 through a rear suspension 36 while the swing arm 29 is supported on the pivot shaft 28 so as to be capable of swinging in the up-down direction Z about the pivot shaft 28. The swing arm 29 has a rear end where the rear wheel 37 is attached rotatably.

An engine 5 is arranged below the main frame 22 and is supported by the main frame 22. The engine 5 is a four-stroke engine to generate power by causing explosion of fuel supplied from the fuel tank 24. The engine 5 transmits the power to the rear wheel 37 through a secondary reduction mechanism, thereby rotating the rear wheel 37.

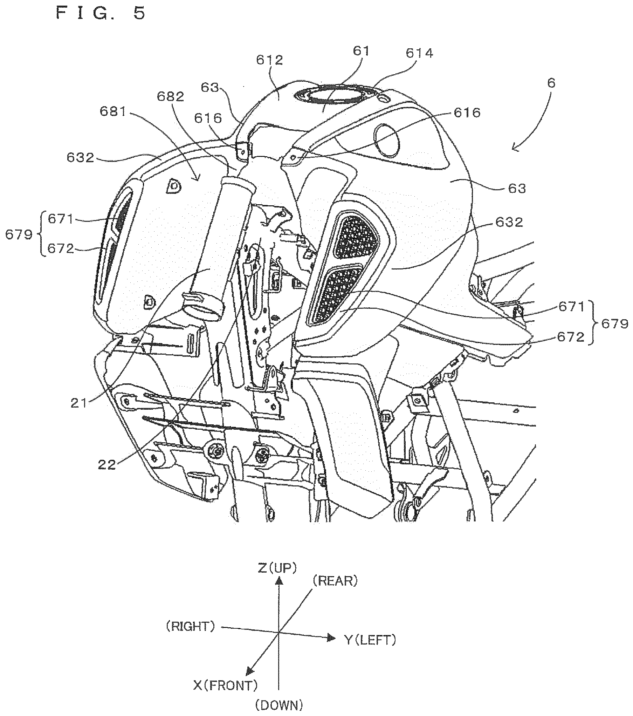

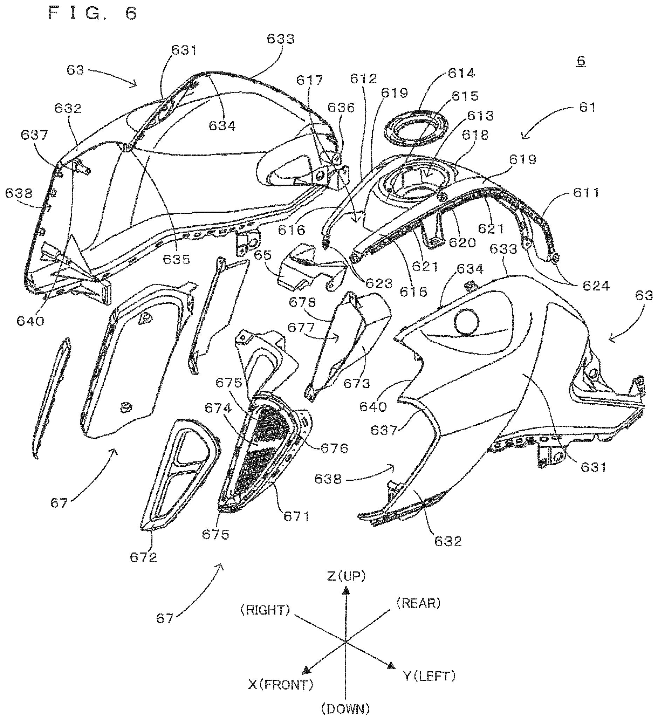

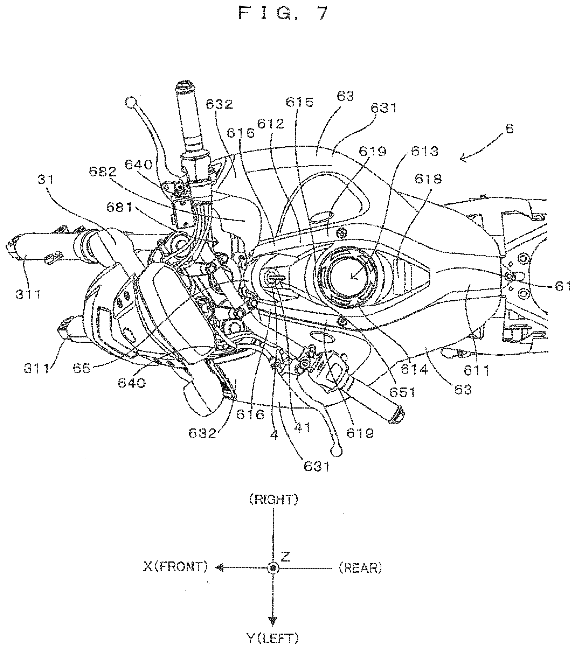

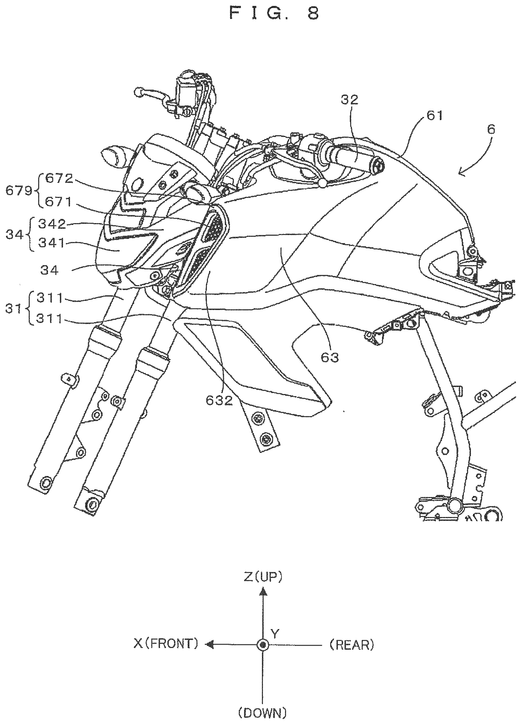

Fig. 5 is a perspective view partially showing the tank cover and its periphery. Fig. 6 is an exploded perspective view showing the tank cover in an exploded state. Fig. 7 is a plan view partially showing the tank cover and its periphery. Fig. 8 is a left side view partially showing the tank cover and its periphery. The tank cover 6 will be described next by referring to these drawings in combination.

As described above, the tank cover 6 covers the fuel tank 24. The tank cover 6 includes a center cover 61, and right and left side covers 63 in a pair between which the center cover 61 is caught from the left-right direction Y. The center cover 61 overlaps the fuel tank 24 in a vehicle plan view. The left side cover 63 belonging to the side covers 63 in a pair overlaps the fuel tank 24 in a vehicle left side view. The right side cover 63 belonging to the side covers 63 in a pair overlaps the fuel tank 24 in a vehicle right side view. Specifically, the fuel tank 24 is caught between the side covers 63 in a pair from the left-right direction Y.

The center cover 61 includes a rear end part 611, and a front end part 612 extended frontward from the rear end part 611. The rear end part 611 has a shape that goes upward as it goes forward. The front end part 612 has a shape that goes downward as it goes forward. The front end part 612 is provided with a fuel filler hole 613 formed to face a fuel filler opening of the fuel tank 24. A toric member 614 is attached to the fuel filler hole 613. In this way, the fuel filler opening of the fuel tank 24 is exposed inside the toric member 614.

The front end part 612 of the center cover 61 includes right and left frontward projecting parts 616 in a pair projecting frontward further than the front end of a peripheral part 615 around the fuel filler hole 613. A clearance 617 recessed rearward is formed between the frontward projecting parts 616 in a pair in the left-right direction Y. In other words, the frontward projecting parts 616 in a pair are arranged at the front end of the center cover 61 so as to be separated by the clearance 617 in the left-right direction Y.

From a different point of view, the front end part 612 of the center cover 61 includes a center part 618 where the fuel filler hole 613 opens, and side end parts 619 in a pair each extended in the front-rear direction X and between which the center part 618 is caught from the left-right direction Y. The side end parts 619 in a pair project frontward further than the center part 618. The foregoing frontward projecting part 616 is formed at a front end section of each side end part 619, specifically, at a section projecting frontward further than the center part 618.

The center cover 61 includes an outer edge part 620 forming each of ends of the center cover 61 in the left-right direction Y (in other words, an outer edge part of the side end part 619). A plurality of engaging clicks 621 are arranged at intervals at the outer edge part 620. The front end of the center cover 61 in the front-rear direction X (in other words, the front end of the frontward projecting part 616 or that of the side end part 619) is provided with a front side fastening position 623. The rear end of the center cover 61 in the front-rear direction X (in other words, the rear end of the side end part 619) is provided with a rear side fastening position 624. The rear side fastening position 624 is located behind the rear end of the fuel tank 24. An insertion hole allowing insertion of a fastening member (screw) is formed at each of the front side fastening position 623 and the rear side fastening position 624. The foregoing plurality of engaging clicks 621 are arranged between the front side fastening position 623 and the rear side fastening position 624 along the outer edge part 620.

The tank cover 6 further includes a handle lock cover 65 arranged at the front end of the center cover 61. The handle lock cover 65 is arranged at the upper end of a key cylinder of the handle lock 4, and has a cover hole 651 facing the keyhole 41 of the handle lock 4. In this way, the keyhole 41 is exposed inside the cover hole 651 of the handle lock cover 65. The handle lock cover 65 having this configuration is arranged at the clearance 617 formed between the frontward projecting parts 616 in a pair of the center cover 61. Each of the front end of the center cover 61 and the front side fastening position 623 is located ahead of the front end of the keyhole 41 of the handle lock 4.

The right and left side covers 63 in a pair have the same configuration, except that the side covers 63 are bilaterally symmetric. The side cover 63 has an appearance projecting outward in the left-right direction Y in a vehicle front view. The side cover 63 includes a main body part 631 facing the center cover 61 from the left-right direction Y, and a frontward extended part 632 extended frontward from the main body part 631. The frontward extended part 632 is extended frontward further than the front end of the center cover 61.

An upper edge part 633 is formed along the upper edge of the main body part 631 of the side cover 63 so as to be pointed inward in the left-right direction Y. A plurality of engaging clicks 634 are arranged at intervals at the upper edge part 633. The upper edge part 633 has a shape conforming to the shape of the outer edge part 620 of the center cover 61. The front end of the main body part 631 of the side cover 63 (in other words, the front end of the upper edge part 633) is provided with a front side fastening position 635. The rear end of the main body part 631 of the side cover 63 (in other words, the rear end of the upper end part 633) is provided with a rear side fastening position 636. The rear side fastening position 636 is located behind the rear end of the fuel tank 24. A fastening hole allowing fastening with the fastening member (screw) is formed at each of the front side fastening position 635 and the rear side fastening position 636. The foregoing plurality of engaging clicks 634 are arranged between the front side fastening position 635 and the rear side fastening position 636 along the upper edge part 633.

While the upper edge part 633 of the side cover 63 and the outer edge part 620 of the center cover 61 are aligned from the left-right direction Y, the engaging clicks 634 of the sider cover 63 and the engaging clicks 621 of the center cover 61 are engaged with each other. Further, the fastening hole at the front side fastening position 635 of the side cover 63 and the insertion hole at the front side fastening position 623 of the center cover 61 are arranged to face each other in the left-right direction Y, and the fastening member inserted into the insertion hole from the inside toward the outside of the insertion hole is screwed into the fastening hole. By doing so, the side cover 63 and the center cover 61 are fastened to each other at the front side fastening positions 635 and 623. Likewise, the fastening hole at the rear side fastening position 636 of the side cover 63 and the insertion hole at the rear side fastening position 624 of the center cover 61 are arranged to face each other in the left-right direction Y, and the fastening member inserted into the insertion hole from the inside toward the outside of the insertion hole is screwed into the fastening hole. By doing so, the side cover 63 and the center cover 61 are fastened to each other at the rear side fastening positions 636 and 624.

In a vehicle front view, a front edge part 637 located at the front end of the frontward extended part 632 of the side cover 63 has a shape projecting outward in the left-right direction Y and opens inward in the left-right direction Y. In this way, an opening part 638 partially surrounded by the front edge part 637 from the outside of the left-right direction Y is formed at the front end of the frontward extended part 632 of the side cover 63 so as to face frontward.

The tank cover 6 includes right and left wind receiving members 67 in a pair provided to be responsive to the right and left side covers 63 in a pair. The right and left wind receiving members 67 in a pair have the same configuration, except that the wind receiving members 67 are bilaterally symmetric. The wind receiving member 67 is attached to the front edge part 637 of the side cover 63 so as to overlap the opening part 638 of the side cover 63 in a vehicle front view.

The wind receiving member 67 includes a mesh part 671, a frame 672 arranged ahead of the mesh part 671, and a wind receiving box 673 arranged behind the mesh part 671. The mesh part 671 has a front end plane 674 that is tilted rearward as it goes outward in the left-right direction Y. The front end plane 674 is provided with a plurality of vent holes 675 arranged two-dimensionally. The front end plane 674 has two vertically separated regions with the arranged vent holes 675. A section between these two regions functions as a reinforcing section for increasing the strength of the front end plane 674 (in other words, a flat plate including the front end plane 674). The mesh part 671 includes a flange 676 formed to surround the plurality of vent holes 675 at the front end plane 674. The flange 676 projects frontward from the front end plane 674. Like the front end plane 674, the flange 676 having this configuration is tilted rearward as it goes outward in the left-right direction Y. In this way, the mesh part 671 including the front end plane 674 and the flange 676 is attached to the side cover 63 while being tilted with respect to the left-right direction Y so as to go rearward as it goes outward in the left-right direction Y.

The frame 672 is attached to the mesh part 671 so as to partially cover the foregoing reinforcing section and the flange 676 of the mesh part 671 from the front. The frame 672 is attached to fit the mesh part 671 so as to be tilted rearward as it goes outward in the left-right direction Y. In this way, a front end part 679 of the wind receiving member 67, which is formed using the mesh part 671 and the frame 672, is attached to the side cover 63 while being tilted with respect to the left-right direction Y so as to go rearward as it goes outward in the left-right direction Y. The front end part 679 of the wind receiving member 67 corresponds to a part exposed forwardly out of a member including the mesh part 671 and the frame 672 in a vehicle front view when the motorcycle 1 is traveling in a straight line.

The wind receiving box 673 is a box-like member with a front end where a vent opening 677 is formed to face frontward. The wind receiving box 673 is attached to the mesh part 671 from behind while a front edge part 678 at the periphery of the vent opening 677 is in contact with the mesh part 671 in such a manner that, in a vehicle front view, the front edge part 678 of the wind receiving box 673 surrounding the vent opening 677 encompasses the plurality of vent holes 675, in other words, the plurality of vent holes 675 are included in the vent opening 677.

The right and left wind receiving members 67 in a pair having the foregoing configuration receive traveling wind from the front of the vehicle, the traveling wind generated when the motorcycle 1 is traveling. In particular, a wall surface at the rear end of the wind receiving box 673 receives the traveling wind from the front of the vehicle, the traveling wind passing through the vent holes 675 of the mesh part 671 and entering the interior of the wind receiving box 673. The traveling wind coming to a place outside the plurality of the vent holes 675 of the mesh part 671 is received by the frame 672.

As shown in Fig. 3, the side cover 63 includes a projecting part 639 formed at each of the opposite sides of the side cover 63 in the left-right direction Y. The projecting part 639 projects outward in the left-right direction Y from the wind receiving member 67 at a position Lx where the tank cover 6 has a maximum width in the left-right direction Y in a vehicle front view. In the left-right direction Y, the front end part 679 of the wind receiving member 67 has a width W679 larger than a width W639 of the projecting part 639. Further, the area of the front end part 679 of the wind receiving member 67 in a vehicle front view (specifically, the area of the front end part 679 shown in Fig. 3) is larger than the area of the front end part 679 of the wind receiving member 67 in a vehicle side view (specifically, the area of the front end part 679 shown in Fig. 1).

As shown in Figs. 5 and 7, in the tank cover 6 having the foregoing configuration, the respective frontward extended parts 632 of the side covers 63 in a pair and the front end of the center cover 61 form a concave part 681 recessed rearward in a vehicle plan view. Space formed inside the side covers 63 in a pair and the center cover 61 is opened frontward at the concave part 681. Meanwhile, the tank cover 6 includes an inner cover 682 having a shape conforming to the shape of the concave part 681. The inner cover 682 is attached to the concave part 681 from the front. The inner cover 682 is attached to a pair of the frontward extended parts 632 of the side covers 63 and to the center cover 61 so as to overlap the inner side of inner edge parts 640 in the left-right direction Y of the respective frontward extended parts 632 of the side covers 63 in a pair (specifically, inwardly pointed edges in the left-right direction Y) and the front end of the center cover 61 in a vehicle front view. In this way, the inner cover 682 overlaps the space formed inside the side covers 63 in a pair and the center cover 61 in a vehicle front view.

As shown in the vehicle front view of Fig. 3, the foregoing front fork 31 and headlight unit 34 are arranged between the wind receiving members 67 attached to the respective frontward extended parts 632 of the right and left side covers 63 in a pair (in other word, inside the wind receiving members 67) in the left-right direction Y. As shown in the vehicle left side view of Fig. 1, when the motorcycle 1 is traveling in a straight line, both the forkpipes 311 in a pair of the front fork 31 do not overlap the side covers 63 in a pair but project frontward from the side covers 63. Meanwhile, as shown in the vehicle left side view of Fig. 8, when the front fork 31 has been rotated to the left to a maximum angle about the head pipe 21, the left forkpipe 311 and the left side cover 63 overlap each other in the vehicle left side view and the left forkpipe 311 is partially hidden by the left side cover 63. This also applies to a vehicle right side view not shown in the drawings. When the front fork 31 has been rotated to the right to a maximum angle about the head pipe 21, the right forkpipe 311 and the right side cover 63 overlap each other in the vehicle right side view and the right forkpipe 311 is partially hidden by the right side cover 63.

As shown in the vehicle plan view of Fig. 2, the tank cover 6 has a width W6 larger than a width W26 of the rear cover 26 in the left-side direction Y.

According to the embodiment having the foregoing configuration, the handle lock 4 is arranged behind the front fork 31. This makes it possible to ensure accessibility to the handle lock 4 for a rider.

The handle lock 4 is arranged between the front fork 31 and the fuel tank 24. This unintentionally produces space (clearance) in the left-right direction Y at the handle lock 4 to cause the risk of difficulty in making the appearance of the motorcycle 1 look large. In this regard, with the intention of increasing the size of the motorcycle 1 further, the front end of the center cover 61 is located ahead of the front end of the keyhole 41 of the handle lock 4, and the rear end of the center cover 61 is located behind the rear end of the fuel tank 24. Specifically, the center cover 61 is extended long in a range from a position ahead of the keyhole 41 to a position behind the fuel tank 24. Further, the side cover 63 includes the frontward extended part 632 extended frontward further than the front end of the center cover 61. When the front fork 31 has been rotated to the right or left to a maximum angle, the right or left forkpipe 311 of the front fork 31 overlaps the right or left side cover 63 in a vehicle side view. Specifically, the side cover 63 is extended frontward longer than the center cover 61 to such an extent that the side cover 63 overlaps the forkpipe 311 of the front fork 31 having rotated to a maximum. This encourages size increase of the tank cover 6 including the center cover 61 and the side cover 63.

As described above, this embodiment is capable of encouraging size increase of the tank cover 6 while ensuring accessibility to the handle lock 4 for a rider. This embodiment is further capable of effectively handling new problems to occur resulting from the foregoing configuration.

The right and left side covers 63 in a pair include the frontward extended parts 632 extended frontward further than the center cover 61 provided between the side covers 63. The frontward extended parts 632 are required to be arranged outside the front fork 31 and the headlight unit 34 in order to avoid interference with the front fork 31. Hence, when the vehicle is traveling, the traveling wind hits the inner sides of the frontward extended parts 632 to cause the risk of separation of the side covers 63 from the center cover 61.

In this regard, according to this embodiment, the center cover 61 and the side cover 63 are fastened to each other at the front side fastening positions 635 and 623 ahead of the front end of the keyhole 41, and at the rear side fastening positions 636 and 624 behind the rear end of the fuel tank 24. In this way, tight fastening of the center cover 61 and the side cover 63 is encouraged. Further, the wind receiving member 67 to receive the traveling wind from the front is attached to the front end of the frontward extended part 632 of the side cover 63. The traveling wind hitting the wind receiving member 67 from the front acts to press the wind receiving member 67 rearward. This rearward force acting on the wind receiving member 67 is functional to work against force acting to separate the side cover 63 from the center cover 61. This makes it possible to reduce the likelihood of separation of the side cover 63 from the center cover 61.

Additionally, in a vehicle front view, the side cover 63 includes the projecting part 639 projecting outward in the left-right direction Y from the wind receiving member 67 at the position Lx where the width W6 of the tank cover 6 is at a maximum in the left-right direction Y. In the left-right direction Y, the width W679 of the front end part 679 of the wind receiving member 67 is larger than the width W639 of the projecting part 639. Further, the area of the front end part 679 of the wind receiving member 67 in a vehicle front view is larger than the area of the front end part 679 of the wind receiving member 67 in a vehicle side view. This configuration makes it possible to ensure rearward force acting on the wind receiving member 67 more reliably, so that the likelihood of separation of the side cover 63 from the center cover 61 can be reduced effectively.
The respective frontward extended parts 632 of the side covers 63 in a pair and the front end of the center cover 61 form the concave part 681 recessed rearward in a vehicle plan view. The tank cover 6 includes the inner cover 682 provided at the concave part 681. The inner cover 682 is attached to the side covers 63 and the center cover 61 so as to overlap the inner side of the inner edge parts 640 of the respective frontward extended parts 632 of the side covers 63 in a pair and the front end of the center cover 61 in a vehicle front view. In this configuration, the inner cover 682 is functional to prevent entry of the traveling wind into space formed inside the center cover 61 and the right and left side covers 63 in a pair, so that the likelihood of separation of the side covers 63 from the center cover 61 can be reduced more effectively.

The center cover 61 has the clearance 617 formed behind the front end of the center cover 61. The keyhole 41 is provided at the clearance 617. This configuration allows the front end of the center cover 61 to be located ahead of the front end of the keyhole 41, so that size increase of the tank cover 6 can be encouraged.

The wind receiving member 67 includes the mesh part 671 having the plurality of vent holes 675, and the wind receiving box 673 arranged behind the mesh part 671 and to receive the traveling wind from the front of the vehicle, the traveling wind passing through the plurality of the vent holes 675. In this configuration, the traveling wind hitting the wind receiving box 673 after passing through the plurality of the vent holes 675 of the mesh part 671 acts to press the wind receiving box 673 rearward. This rearward force is functional to reduce the likelihood of separation of the side cover 63 from the center cover 61.

The wind receiving box 673 has a box-like shape with the vent opening 677 facing frontward. The front edge part 678 (periphery) of the vent opening 677 of the wind receiving box 673 is in contact with the mesh part 671 in such a manner that the plurality of the vent holes 675 are included in the vent opening 677 in a vehicle front view. The wind receiving box 673 receives the traveling wind from the front, the traveling wind passing through the plurality of vent holes 675. In this configuration, force acting to press the wind receiving box 673 rearward is produced effectively, so that the likelihood of separation of the side cover 63 from the center cover 61 can be reduced more reliably.

The rear cover 26 is arranged behind the tank cover 6. The width W6 of the tank cover 6 is larger than the width W26 of the rear cover 26 in the left-right direction Y. In this way, size increase of the tank cover 6 is encouraged.

As described above, in this embodiment, the motorcycle 1 corresponds to an example of a "straddle type vehicle" of the present invention. The handle lock 4 corresponds to an example of a "handle lock" of the present invention. The tank cover 6 corresponds to an example of a "tank cover" of the present invention. The head pipe 21 corresponds to an example of a "head pipe" of the present invention. The main frame 22 corresponds to an example of a "main frame" of the present invention. The seat 23 corresponds to an example of a "seat" of the present invention. The fuel tank 24 corresponds to an example of a "fuel tank" of the present invention. The tandem seat 25 corresponds to an example of a "tandem seat" of the present invention. The rear cover 26 corresponds to an example of a "rear cover" of the present invention. The front fork 31 corresponds to an example of a "front fork" of the present invention. The headlight unit 34 corresponds to an example of a "headlight unit" of the present invention. The keyhole 41 corresponds to an example of a "lock operation part" of the present invention. The center cover 61 corresponds to an example of a "center cover" of the present invention. The side cover 63 corresponds to an example of a "side cover" of the present invention. The handle lock cover 65 corresponds to an example of a "handle lock cover" of the present invention. The wind receiving member 67 corresponds to an example of a "wind receiving member" of the present invention. The forkpipe 311 corresponds to an example of a "forkpipe" of the present invention. The clearance 617 corresponds to an example of an "operation hole" of the present invention. The front side fastening positions 623 and 635, and the rear side fastening positions 624 636 correspond to an example of a "fastening position" of the present invention. The projecting part 639 corresponds to an example of a "projecting part" of the present invention. The mesh part 671 corresponds to an example of a "mesh part" of the present invention. The wind receiving box 673 corresponds to an example of a "wind receiving part" or "wind receiving box" of the present invention. The vent hole 675 corresponds to an example of a "vent hole" of the present invention. The vent opening 677 corresponds to an example of a "vent opening" of the present invention. The front end part 679 corresponds to an example of a "front end part" of the present invention. The concave part 681 corresponds to an example of a "concave part" of the present invention. The inner cover 682 corresponds to an example of an "inner cover" of the present invention.

The present invention is not limited to the above-described embodiment. Various changes are applicable to the above-described embodiment within a range not deviating from the invention. For example, the specific configuration of the wind receiving member 67 is not limited to the foregoing example but can be modified as follows. In this modification, the wind receiving member 67 has one wind receiving flat plate (wind receiving part) including the front end plane 674 (wind receiving surface) formed on the entire front surface of the wind receiving flat plate. Unlike in the foregoing example, the front end plane 674 of this modification is not provided with the vent hole 675. The front end plane 674 receives the traveling wind from the front. Like in the foregoing example, the front end plane 674 of this modification is arranged so as to be tilted rearward as it goes outward in the left-right direction Y.

The wind receiving member 67 of this modification to receive the traveling wind from the front is also attached to the front end of the frontward extended part 632 of the side cover 63. The traveling wind hitting the wind receiving member 67 of this modification from the front acts to press the wind receiving member 67 rearward. In this way, the rearward force acting on the wind receiving member 67 is functional to work against force acting to separate the side cover 63 from the center cover 61. This makes it possible to reduce the likelihood of separation of the side cover 63 from the center cover 61.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention. It is therefore contemplated that the appended claims will cover any such modifications or embodiments as fall within the scope of the invention.

## Claims

1. A straddle type vehicle (1) comprising:
a head pipe (21);
a front fork (31) including right and left forkpipes (311) in a pair and rotatably supported by the head pipe (21);
a headlight unit (34) arranged ahead of the head pipe (21) and rotatably supported together with the front fork (31);
a main frame (22) extended rearward from the head pipe (21);
a fuel tank (24) arranged above the main frame (22);
a handle lock (4) arranged above the main frame (22) and between the head pipe (21) and the fuel tank (24), the handle lock (4) is configured to lock rotation of the front fork (31) in response to operation on a lock operation part (41) by a rider;
a seat (23) arranged above the main frame (22) and behind the fuel tank (24); and
a tank cover (6) attached to the fuel tank (24), wherein
the tank cover (6) includes a center cover (61) arranged above the fuel tank (24) so as to overlap the fuel tank (24) in a vehicle plan view, and side covers (63) in a pair arranged on the right side and the left side of the center cover (61) so as to overlap the fuel tank (24) in a vehicle side view,
the center cover (61) has a front end located ahead of a front end of the lock operation part (41) and the center cover (61) has a rear end located behind a rear end of the fuel tank (24),
the center cover (61) and each of the side covers (63) are fastened to each other at front side fastening positions (635 and 623) ahead of the front end of the lock operation part (41) and at rear side fastening positions (636 and 624) behind the rear end of the fuel tank (24),
each of the side covers (63) includes a frontward extended part (632) extended frontward further than the front end of the center cover (61),
the front fork (31) is arranged inside the respective frontward extended parts (632) of the side covers (63) in a pair in a left-right direction (Y) in a vehicle front view,
when the front fork (31) has been rotated to the left to a maximum angle about the head pipe (21), the left forkpipe (311) and the left side cover (63) overlap each other in a vehicle side view,
when the vehicle (1) is traveling in a straight line, the forkpipes (311) in a pair do not overlap the side covers (63) in a pair in a vehicle side view,
when the front fork (31) has been rotated to the right to a maximum angle about the head pipe (21), the right forkpipe (311) and the right side cover (63) overlap each other in a vehicle side view,
the tank cover (6) includes a wind receiving member (67) attached to the front end of each of the respective frontward extended parts (632) of the side covers (63) in a pair and to receive traveling wind from the front of the vehicle (1),
in a vehicle front view, the front fork (31) and the headlight unit (34) are arranged inside the wind receiving members (67) in the left-right direction (Y), the wind receiving member (67) is attached to each of the respective frontward extended parts (632) of the side covers (63) in a pair,
in a vehicle front view, each of the side covers (63) includes a projecting part (639) projecting outward in the left-right direction (Y) from the wind receiving member (67) at a position (Lx) where the tank cover (6) has a maximum width in the left-right direction (Y), and a front end part (679) of the wind receiving member (67) has a width (W679) larger than the width (W639) of the projecting part (639) in the left-right direction (Y), and
in a vehicle plan view, the front end part (679) of the wind receiving member (67) is tilted rearward as going outward in the left-right direction (Y), and the area of the front end part (679) of the wind receiving member (67) in a vehicle front view is larger than the area of the front end part (679) of the wind receiving member (67) in a vehicle side view.

2. A straddle type vehicle (1) according to claim 1, wherein
in a vehicle plan view, the respective frontward extended parts (632) of the side covers (63) in a pair and the front end of the center cover (61) form a concave part (681) recessed rearward,
the tank cover (6) includes an inner cover (682) provided at the concave part (681), and
the inner cover (682) is attached to the respective frontward extended parts (632) of the side covers (63) in a pair and the center cover (61) so as to overlap the inner sides of peripheries of the frontward extended parts (632) and the front end of the center cover (61) in a vehicle front view.

3. A straddle type vehicle (1) according to claim 1 or 2, wherein
the center cover (61) has an operation hole (617) formed behind the front end of the center cover (61), and
the lock operation part (41) is provided at the operation hole (617).

4. A straddle type vehicle (1) according to any one of claims 1 to 3, wherein
the wind receiving member (67) includes:
a mesh part (671) which has a plurality of vent holes (675) and arranged at the front end of the wind receiving member (67); and
a wind receiving part (673) which is arranged behind the mesh part (671) and receives a traveling wind from the front of the vehicle (1), the traveling wind passing through the plurality of the vent holes (675).

5. A straddle type vehicle (1) according to claim 4, wherein
the wind receiving part (673) is a box-like wind receiving box having a vent opening (677) formed to be pointed frontward,
a periphery of the vent opening (677) of the wind receiving box is in contact with the mesh part (671) in such a manner that the plurality of the vent holes (675) are included in the vent opening (677) in a vehicle front view, and
the traveling wind from the front which passes through the plurality of the vent holes (675), is receives by an inner wall of the wind receiving box.

6. A straddle type vehicle (1) according to any one of claims 1 to 3, wherein
the wind receiving member (67) includes a wind receiving part (673) including a wind receiving surface (674) arranged on an entire surface of the wind receiving member (67), and
the wind receiving surface (674) receives the traveling wind from the front.

7. A straddle type vehicle (1) according to any one of claims 1 to 6, further comprising a rear cover (26) provided behind the tank cover (6), wherein
in a vehicle plan view, the tank cover (6) has a width (W6) larger than the width (W26) of the rear cover (26) in the left-side direction (Y).

## Patentansprüche

1. Spreizsitz-Fahrzeug (1), das umfasst:
ein Steuerrohr (21);
eine Vorderradgabel (31), die ein rechtes und ein linkes Gabelrohr (311) in einem Paar enthält und drehbar von dem Steuerrohr (21) getragen wird;
eine Scheinwerfer-Einheit (34), die vor dem Steuerrohr (21) angeordnet ist und zusammen mit der Vorderradgabel (31) drehbar getragen wird;
einen Hauptrahmen (22), der sich von dem Steuerrohr (21) nach hinten erstreckt;
einen Kraftstofftank (24), der über dem Hauptrahmen (22) angeordnet ist;
eine Griffverriegelung (4), die über dem Hauptrahmen (22) und zwischen dem Steuerrohr (21) und dem Kraftstofftank (24) angeordnet ist, wobei die Griffverriegelung (4) so ausgeführt ist, dass sie Drehung der Vorderradgabel (31) in Reaktion auf Betätigung an einem Verriegelungs-Betätigungsteil (41) durch einen Fahrer sperrt;
einen Sitz (23), der über dem Hauptrahmen (22) und hinter dem Kraftstofftank (24) angeordnet ist; sowie
eine Tankverkleidung (6), die an dem Kraftstofftank (24) angebracht ist, wobei
die Tankverkleidung (6) eine Mittelverkleidung (61), die über dem Kraftstofftank (24) so angeordnet ist, dass sie den Kraftstofftank (24) in einer Fahrzeug-Draufsicht überlappt, sowie Seitenverkleidungen (63) in einem Paar umfasst, die an der rechten Seite und der linken Seite der Mittelverkleidung (61) so angeordnet sind, dass sie den Kraftstofftank (24) in einer Fahrzeug-Seitenansicht überlappen,
wobei die Mittelverkleidung (61) ein vorderes Ende hat, das sich vor einem vorderen Ende des Verriegelungs-Betätigungsteils (41) befindet, und die Mittelverkleidung (61) ein hinteres Ende hat, das sich hinter einem hinteren Ende des Kraftstofftanks (24) befindet,
die Mittelverkleidung (61) und jede der Seitenverkleidungen(63) an vorderen seitlichen Befestigungspositionen (635 und 623) vor dem vorderen Ende des Verriegelungs-Betätigungsteils (41) und an hinteren seitlichen Befestigungspositionen (636 und 624) hinter dem hinteren Ende des Kraftstofftanks (24) aneinander befestigt sind,
jede der Seitenverkleidungen (63) einen nach vorn verlängerten Teil (632) enthält, der sich weiter nach vorn erstreckt als das vordere Ende der Mittelverkleidung (61),
die Vorderradgabel (31) innerhalb der jeweiligen nach vorn verlängerten Teile (632) der Seitenverkleidungen (63) in einem Paar in einer Querrichtung (Y) in einer Fahrzeug-Vorderansicht angeordnet ist,
wenn die Vorderradgabel (31) um einen maximalen Winkel um das Steuerrohr (21) herum nach links gedreht worden ist, das linke Gabelrohr (311) und die linke Seitenverkleidung (63) einander in einer Fahrzeug-Seitenansicht überlappen,
wenn das Fahrzeug (1) in einer geraden Linie fährt, die Gabelrohre (311) in einem Paar die Seitenverkleidungen(63) in einem Paar in einer Fahrzeug-Seitenansicht nicht überlappen,
wenn die Vorderradgabel (31) um einen maximalen Winkel um das Steuerrohr (21) herum nach rechts gedreht worden ist, das rechte Gabelrohr (311) und die rechte Seitenverkleidung (63) einander in einer Fahrzeug-Seitenansicht überlappen,
die Tankverkleidung (6) ein Windaufnahme-Element (67) enthält, das an dem vorderen Ende jedes der jeweiligen nach vorn verlängerten Teile (632) der Seitenverkleidungen (63) in einem Paar angebracht ist, um Fahrtwind von der Vorderseite des Fahrzeugs (1) aufzunehmen,
in einer Fahrzeug-Vorderansicht die Vorderradgabel (31) und die Scheinwerfer-Einheit (34) in der Querrichtung (Y) innerhalb der Windaufnahmeelemente (67) angeordnet sind, das Windaufnahme-Element (67) an jedem der jeweiligen nach vorn verlängerten Teile (632) der Seitenverkleidungen (63) in einem Paar angebracht ist,
in einer Fahrzeug-Vorderansicht jede der Seitenverkleidungen (63) einen vorstehenden Teil (639) enthält, der in der Querrichtung (Y) von dem Windaufnahmeelement (67) an einer Position (Lx) nach außen vorsteht, an der die Tankverkleidung (6) eine maximale Breite in der Querrichtung (Y) hat, und ein vorderer Endteil (679) des Windaufnahme-Elementes (67) eine Breite (W679) hat, die größer ist als die Breite (W639) des vorstehenden Teils (639) in der Querrichtung (Y), und
in einer Fahrzeug-Draufsicht der vordere Endteil (679) des Windaufnahme-Elementes (67) im Verlauf nach außen in der Querrichtung (Y) nach hinten geneigt ist, und die Flächenausdehnung des vorderen Endteils (679) des Windaufnahme-Elementes (67) in einer Fahrzeug-Vorderansicht größer ist als die Flächenausdehnung des vorderen Endteils (679) des Windaufnahme-Elementes (67) in einer Fahrzeug-Seitenansicht.

2. Spreizsitz-Fahrzeug (1) nach Anspruch 1, wobei
in einer Fahrzeug-Draufsicht die jeweiligen nach vorn verlängerten Teile (632) der Seitenverkleidungen (63) in einem Paar und das vordere Ende der Mittelverkleidung (61) einen nach hinten ausgesparten konkaven Teil (681) bilden,
die Tankverkleidung (6) eine Innenverkleidung (682) enthält, die an dem konkaven Teil (681) vorhanden ist, und
die Innenverkleidung (682) an den jeweiligen nach vorn verlängerten Teilen (632) der Seitenverkleidungen (63) in einem Paar und der Mittelverkleidung (61) so angebracht ist, dass sie die Innenseiten des Umfangs der nach vorn verlängerten Teile (632) und das vordere Ende der Mittelverkleidung (61) in einer Fahrzeug-Vorderansicht überlappt.

3. Spreizsitz-Fahrzeug (1) nach Anspruch 1oder 2, wobei
die Mittelverkleidung (61) eine Betätigungsöffnung (617) aufweist, die hinter dem vorderen Ende der Mittelverkleidung (61) ausgebildet ist, und
das Verriegelungs-Betätigungsteil (41) an der Betätigungsöffnung (617) vorhanden ist.

4. Spreizsitz-Fahrzeug (1) nach einem der Ansprüche 1 bis 3, wobei
das Windaufnahme-Element (67) enthält:
ein Gitter-Teil (671), das eine Vielzahl von Lüftungslöchern (675) aufweist und an dem vorderen Ende des Windaufnahme-Elementes (67) angeordnet ist; und
ein Windaufnahme-Teil (673), das hinter dem Gitter-Teil (671) angeordnet ist und einen Fahrtwind von der Vorderseite des Fahrzeugs (1) aufnimmt, wobei der Fahrtwind durch die Vielzahl der Lüftungslöcher (675) hindurchtritt.

5. Spreizsitz-Fahrzeug (1) nach Anspruch 4, wobei
das Windaufnahme-Teil (673) ein kastenartiger Windaufnahme-Kasten mit einer Lüftungsöffnung (677) ist, die so ausgebildet ist, dass sie nach vorn gerichtet ist,
ein Umfang der Lüftungsöffnung (677) des Windaufnahme-Kastens mit dem Gitter-Teil (671) so in Kontakt ist, dass die Vielzahl der Lüftungslöcher (675) in einer Fahrzeug-Vorderansicht in der Lüftungsöffnung (677) eingeschlossen ist, und
der Fahrtwind von vorn, der durch die Vielzahl der Lüftungslöcher (675) hindurchtritt, von einer Innenwand des Windaufnahme-Kastens aufgenommen wird.

6. Spreizsitz-Fahrzeug (1) nach einem der Ansprüche 1 bis 3, wobei
das Windaufnahme-Element (67) einen Windaufnahme-Teil (673) enthält, der eine Windaufnahme-Fläche (674) einschließt, die an einer gesamten Oberfläche des Windaufnahme-Elementes (67) angeordnet ist, und
die Windaufnahmefläche (674) den Fahrtwind von vorn aufnimmt.

7. Spreizsitz-Fahrzeug (1) nach einem der Ansprüche 1 bis 6, das des Weiteren eine hintere Verkleidung (26) umfasst, die hinter der Tankverkleidung (6) vorhanden ist, wobei
in einer Fahrzeug-Draufsicht die Tankverkleidung (6) eine Breite (W6) hat, die größer ist als die Breite (W26) der hinteren Verkleidung (26) in der Querrichtung (Y).

## Revendications

1. Véhicule de type à selle (1) comprenant :
un tube de fourche (21),
une fourche avant (31) incluant une paire de tubes de fourche (300) droite et gauche et supportée par le tube de fourche (21) pour pouvoir tourner,
une unité de bloc optique (34) disposée en tête du tube de fourche (21) et supportée pour pouvoir tourner en même temps que la fourche avant (31),
un cadre principal (22) s'étendant vers l'arrière depuis le tube de fourche (21),
un réservoir de carburant (24) disposé au-dessus du cadre principal (22),
un verrou de poignée (4) disposé au-dessus du cadre principal (22) et entre le tube de fourche (21) et le réservoir de carburant (24), le verrou de poignée (4) étant configuré pour verrouiller la rotation de la fourche avant (31) en réponse à une manœuvre sur un composant de manœuvre de verrou (41) opérée par le pilote,
un siège (23) disposé au-dessus du cadre principal (22) et derrière le réservoir de carburant (24), et
un couvercle de réservoir (6) fixé au réservoir de carburant (24), dans lequel
le couvercle de réservoir (6) inclut un couvercle central (61) disposé au-dessus du réservoir de carburant (24) de sorte à chevaucher le réservoir de carburant (24) dans une vue en plan du véhicule, et une paire de couvercles latéraux (63) agencés sur le côté droit et le côté gauche du couvercle central (61) de sorte à chevaucher le réservoir de carburant (24) dans une vue latérale du véhicule,
le couvercle central (61) comporte une extrémité avant située en-tête de l'extrémité avant du composant de manœuvre de verrou (41), et le couvercle central (61) comporte une extrémité arrière située derrière l'extrémité arrière du réservoir de carburant (24),
le couvercle central (61) et chacun des couvercles latéraux (63) sont assemblés les uns aux autres à des positions de fixation du côté avant (635 et 623) en-tête de l'extrémité avant du composant de manœuvre de verrou (41), ainsi qu'à des positions de fixation du côté arrière (636 et 624) derrière l'extrémité arrière du réservoir de carburant (24),
chacun des couvercles latéraux (63) inclut un composant s'étendant vers l'avant (632) se déployant vers l'avant plus loin que l'extrémité avant du couvercle central (61),
la fourche avant (31) est disposée à l'intérieur des composants respectifs s'étendant vers l'avant (632) des couvercles latéraux (63) dans une paire orientée dans la direction gauche droite (Y) dans une vue avant du véhicule,
lorsque la fourche avant (31) a été tournée vers la gauche jusqu'à un angle maximal autour du tube de fourche (21), le tube de fourche gauche (311) et le couvercle latéral gauche (63) se chevauchent dans une vue latérale du véhicule,
lorsque le véhicule (1) se déplace en ligne droite, la paire de tubes de fourche (311) ne chevauche pas la paire de couvercles latéraux (63) dans une vue latérale du véhicule,
lorsque la fourche avant (31) a été tournée vers la droite jusqu'à un angle maximal autour du tube de fourche (21), le tube de fourche droit (311) et le couvercle latéral droit (63) se chevauchent dans une vue latérale du véhicule,
le couvercle de réservoir (6) inclut un élément situé au vent (67) fixé à l'extrémité avant de chacun des composants respectifs s'étendant vers l'avant (632) de la paire de couvercles latéraux (63) pour recevoir l'air se déplaçant depuis l'avant du véhicule (1),
dans une vue avant du véhicule, la fourche avant (31) et l'unité de bloc optique (34) sont agencées à l'intérieur des éléments situés au vent (67) dans la direction gauche droite (Y), l'élément situé au vent (67) est fixé à chacun des composants respectifs s'étendant vers l'avant (632) de la paire de couvercles latéraux (63),
dans une vue avant du véhicule, chacun des couvercles latéraux (63) inclut un composant en saillie (639) dépassant vers l'extérieur dans la direction gauche droite (Y) depuis l'élément situé au vent (67) au niveau d'une position (Lx) où le couvercle de réservoir (6) présente une largeur maximale dans la direction gauche droite (Y), et un composant d'extrémité avant (679) de l'élément situé au vent (67) présente une largeur (W679) plus importante que la largeur (W639) du composant en saillie (639) dans la direction gauche droite (Y), et
dans une vue en plan du véhicule, le composant d'extrémité avant (679) de l'élément situé au vent (67) est incliné vers l'arrière à mesure qu'il se trouve vers l'extérieur dans la direction gauche droite (Y), et la surface du composant d'extrémité avant (679) de l'élément situé au vent (67), dans une vue avant du véhicule, est plus importante que la surface du composant d'extrémité avant (679) de l'élément situé au vent (67) dans une vue latérale du véhicule.

2. Véhicule de type à selle (1) selon la revendication 1, dans lequel :
dans une vue en plan du véhicule, les composants respectifs s'étendant vers l'avant (632) de la paire de couvercles latéraux (63) et l'extrémité avant du couvercle central (61) forment une pièce concave (681) en creux vers l'arrière,
le couvercle de réservoir (6) inclut un couvercle interne (682) disposé au niveau de la pièce concave (681), et
le couvercle interne (682) est fixé aux composants respectifs s'étendant vers l'avant (632) de la paire de couvercles latéraux (63) et au couvercle central (61) de sorte à chevaucher les côtés internes des périphéries des composants s'étendant vers l'avant (632) et l'extrémité avant du couvercle central (61) dans une vue avant du véhicule.

3. Véhicule de type à selle (1) selon la revendication 1 ou la revendication 2, dans lequel :
le couvercle central (61) possède un trou de manœuvre (617) formé derrière l'extrémité avant du couvercle central (61), et
le composant de manœuvre de verrou (41) est disposé au niveau du trou de manœuvre (617).

4. Véhicule de type à selle (1) selon l'une quelconque des revendications 1 à 3, dans lequel :
l'élément situé au vent (67) inclut :
un composant maillé (671) qui possède une pluralité de trous de ventilation (675) et qui est disposé à l'extrémité avant de l'élément situé au vent (67), et
un composant situé au vent (673) qui est disposé derrière le composant maillé (671) et qui reçoit l'air se déplaçant depuis l'avant du véhicule (1), l'air en déplacement traversant la pluralité de trous de ventilation (675).

5. Véhicule de type à selle (1) selon la revendication 4, dans lequel :
le composant situé au vent (673) est un boîtier situé au vent de type boîtier possédant une ouverture de ventilation (677) formée pour être pointée vers l'avant,
la périphérie de l'ouverture de ventilation (677) du boîtier situé au vent est en contact avec le composant maillé (671) de manière à ce que les différents trous de ventilation (175) soient inclus dans l'ouverture de ventilation (677) dans une vue avant du véhicule, et
l'air en déplacement depuis l'avant qui traverse la pluralité de trous de ventilation (1815) est reçu par une paroi interne du boîtier situé au vent.

6. Véhicule de type à selle (1) selon l'une quelconque des revendications 1 à 3, dans lequel :
l'élément situé au vent (67) inclut un composant situé au vent (673) incluant une surface située au vent (674) disposée sur toute la surface de l'élément situé au vent (67), et
la surface située au vent (674) reçoit l'air en déplacement depuis l'avant.

7. Véhicule de type à selle (1) selon l'une quelconque des revendications 1 à 6, comprenant en outre un couvercle arrière (26) disposé derrière le couvercle de réservoir (6), dans lequel :
le couvercle de réservoir (6), dans une vue en plan du véhicule, présente une largeur (W6) plus importante que la largeur (W26) du couvercle arrière (26) dans la direction gauche droite (Y).
